# EUROPEAN PATENT SPECIFICATION

(11) **EP 1 843 134 B1**
(45) Date of publication and mention of the grant of the patent: **24.02.2016**
(21) Application number: 07006956.2
(22) Date of filing: 03.04.2007
(51) Int. Cl.: G01D 11/24

(54) **Sensor device**
Sensorvorrichtung
Dispositif capteur

(30) Priority: 04.04.2006 JP 2006102604
(43) Date of publication of application: 10.10.2007
(73) Proprietor: ALPS ELECTRIC CO., LTD., Ota-ku Tokyo (JP)
(72) Inventor: ISHIHARA, Kanji, 145-8501 Tokyo (JP)
(74) Representative: Klunker . Schmitt-Nilson . Hirsch

(56) References cited:
- EP-A1- 0 014 533
- EP-A1- 1 304 465

## Description

### BACKGROUND OF THE INVENTION

### 1. Field of the Invention

The present invention relates to a sensor device, and more particularly, to a sensor device used for an exhaust gas recirculation system (EGR system) and the like.

### 2. Description of the Related Art

Conventionally, in a throttle position sensor used for an engine control system of an automobile or an electrical part of an EGR sensor, it is required that the sensor, a connector and a cover member are integrally formed. However, since shapes of the connector are required to have many demands, it is necessary to prepare a mold for each product. Accordingly, it is difficult to reduce manufacturing cost and manufacturing time.

In order to cope with the above-mentioned problem, for example, it is proposed that one end of an electrical part terminal is exposed to the cover member (casing for a electrical part) so as to perform an insert mold, one end of the connector terminal is exposed to a connector housing so as to perform the insert mold, and then one end of the electrical part and one end of the connector terminal are connected (e.g., refer to JP-A-7-2003-142177). According to the electrical part, since it is possible to easily manufacture the connector housing in accordance with requirements of shape such as a connector, each product does not prepare a mold. An example of such a device is disclosed in JP-A-7-2003-142177 .

EP 1 304 465 A1 shows a throttle valve control unit that can easily be assembled and has a simple molding die structure, and a manufacturing method thereof are provided. There are a container shaped casing, a rotation detection portion provided at the outer surface of the casing, a sensor terminal led from the rotation detection portion exposed in a connector housing provided at the casing by insert-molding, a motor feeding terminal with an exposed portion provided in parallel with the sensor terminal, having its one end exposed in the connector housing by insert-molding, and its other end having an exposed portion extended into the casing, and a separate motor feeding conductor attached in the casing. One end f the motor feeding conductor is connected with the exposed portion and the motor terminal as it is held between a pair of first folded portions provided at the other end of the motor feeding conductor.

EP 0 014 533 A1 shows an exhaust oxygen sensor and electrical connector arrangement for use in connecting the sensor to an electronic device capable of utilizing an electrical signal produced by the sensor. The electrical connector arrangement eliminates both male and female electrical connectors required in prior sensor electrical connector arrangements. The new electrical connector arrangement provides a leak-proof connection between a cylindrically-shaped sensor member and a connector assembly including an elastomeric grommet, a plastic sleeve and a plastic spacer used to retain connector terminals within the sleeve for receipt of cooperating terminals on the exhaust gas sensor. The connector-assembly sleeve and the cylindrically-shaped member of the oxygen sensor cooperate to produce a positive latching action of the connector assembly to the exhaust gas sensor.

However, since the insert mold is performed to the cover member, and the like to the electrical part terminal, and the like in the above-mentioned known electrical part, a cost to perform the molding process is increased, thereby increasing the manufacturing cost of the product. In addition, when the cover member performed by the insert mold is increased, a length leading the electrical part terminal is elongated. Accordingly, it is possible to maintain high precision.

### SUMMARY OF THE INVENTION

An advantage of some aspects of the invention is provide a sensor device which maintains high precision between terminals disposed to a unit configuring a main body of the device so as to reduce cost for manufacturing the main body of the device.

According to the invention, there is provided a sensor device as defined in claim 1.

According to the configuration, since the sensor unit, the connector unit and the cover unit are jointed together and the terminal disposed to the units in an exposed position to a surface of the cover unit is connected, a casting mold is not required to cast in a mold which forms integrally the device with one pattern or each unit. Accordingly, it is possible to reduce cost for manufacturing the main body of the device. In addition, the terminal disposed to the unit is connected in a position exposed to a surface of the cover unit and it is not necessary to be wired between the terminals in the inside of the device. Accordingly, when the length is elongated, it is possible to maintain high precision.

In the sensor device, a sensor device may further include a terminal connection member for connecting any two terminals or all of the terminals disposed in the sensor unit, the connector unit, and the cover unit. In this case, since the terminal connection member may be connected to the terminals disposed to the units, it is possible to flexibly cope with various arrangements of the units.

For example, the terminal connection member may be formed of a conductive linear member. In this case, a terminal connection member having high processing workability may be embodied with a cheap price.

Specifically, the linear member may be shaped by a bending process so as to connect any two terminals or all of the terminals disposed in the sensor unit, the connector unit, and the cover unit. In this case, since the terminal disposed to the each unit is connected by the line material which is performed by the bending process, it is possible to flexibly cope with to various dispositions of the each unit with a cheap price.

In the sensor device, only terminals exposed from the surface of the cover unit may be plated among the terminals disposed in the sensor unit, the connector unit, and the cover unit. Accordingly, a plating process is performed only to the terminals of the each unit exposed to the surface of the cover unit and the plating process to the terminal connection member is omitted. Accordingly, it is possible to reduce cost for the plating process.

According to the invention, the invention is to provide a sensor device which maintains high precision between terminals disposed to a unit configuring a main body of the device so as to reduce the cost for manufacturing the main body of the device.

### BRIEF DESCRIPTION OF THE DRAWINGS

Fig. 1 is an exploded perspective view illustrating an EGR sensor of a sensor device according to an embodiment of the invention.
Fig. 2 is a perspective view illustrating the EGR sensor as viewed from the lower side of Fig. 1 according to the embodiment.
Fig. 3 is an upper surface diagram illustrating the EGR sensor according to the embodiment.
Fig. 4 is a perspective view illustrating the EGR sensor as viewed from a connector unit 30 side according to the embodiment.

### DESCRIPTION OF THE PREFERRED EMBODIMENT

The invention according to an embodiment of the invention will be described in detail with reference to the drawings. A sensor device according to the invention will be described in case of applying an EGR sensor detecting a position of an EGR valve. However, the sensor device according to the invention is not limited to the above-mentioned scope. Accordingly, the embodiment may be embodied, when detecting a position of the detected object, and the like.

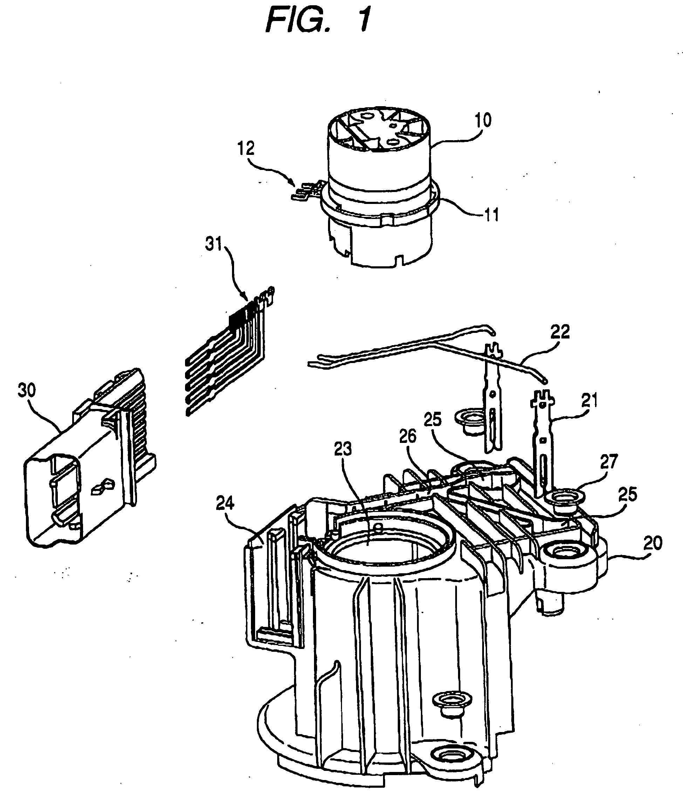

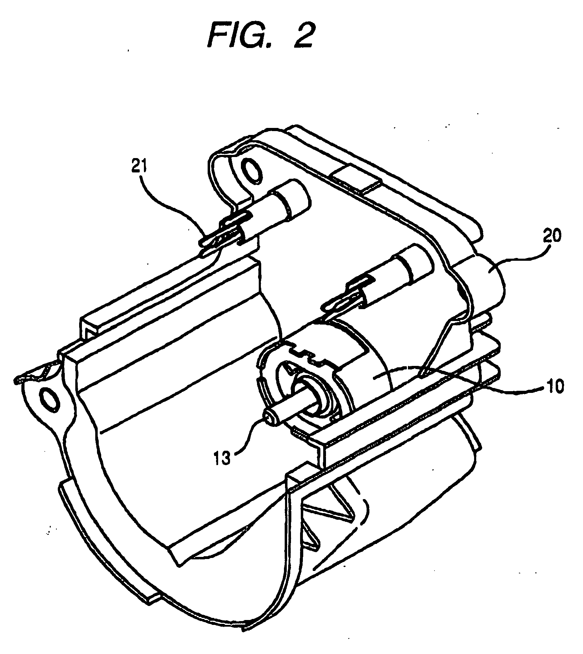

Fig. 1 is an exploded perspective view illustrating an EGR sensor of a sensor device according to an embodiment of the invention. Fig. 2 is a perspective view illustrating the EGR sensor as viewed from the lower side of Fig. 1 according to the embodiment.

The EGR sensor according to the embodiment, a drive motor detects the position of the EGR valve which controls a position of the drive motor. In addition, the position of the EGR valve is controlled by a controller as an external device which controls various control process in an automobile. The position of the EGR valve is controlled in accordance with driving condition, and the like and receives a feedback output from the EGR sensor so as to control the position.

As shown in Fig. 1, the sensor according to the embodiment includes a sensor unit 10, a cover unit 20, and a connector unit 30. The units are jointed and electrically connected with following terminals so as to form the EGR sensor according to the embodiment.

The sensor unit 10 detects the position of the valve and outputs electrical signals in accordance with the position of the EGR valve. The cover unit 20 holds the sensor unit 10 and the connector unit 30. In addition, a terminal 21 (hereinafter, refer to as "motor terminal") outputting a driving signal from the controller 1 is supported and a terminal connection member 22 connecting the motor terminal 21 and a terminal 31 (hereinafter, refer to as "connector terminal") of the connector unit 30 is supported. The connector unit 30 is connected to the EGR sensor and the controller. An electrical signal from the sensor unit 10 is outputted to the controller and a driving signal from the controller is outputted to the drive motor.

As shown in Fig. 1, the sensor unit 10 has a cylindrical shape. In addiction, a locking portion 11 which comes in contact with a sensor receiving portion 23 of the cover unit 20 around the center of the external peripheral portion is provided. A cylindrical portion disposed below the locking portion 11 is inserted into an inside of the cover unit 20. A terminal 12 (hereinafter, refer to as "sensor terminal") which detects an electrical signal in accordance with a position of the EGR valve detected by the sensor unit 10 around the locking portion 11. The sensor terminal 12 is disposed toward the connector unit 30 so as to protrude.

As shown in Fig. 2, an drive shaft 13 protrudes in accordance with a position of the EGR valve from a lower part of the sensor unit 10. Since a movable portion (not shown) having the drive shaft 13 moves and a slider is provided on a resist substrate according to the drive shaft 13, the detail description will be omitted. In the sensor unit 10, the drive shaft 13 moves in accordance with the position of the EGR valve. In addition, an electrical signal which corresponds to a position on a resist substrate of a slider moving in accordance with a movement of the drive shaft 13 may be outputted from the sensor terminal 12.

The cover unit 20 is melted by using a soluble resin material. As shown in Fig. 2, the cover unit 20 is formed in a shape which may receive the EGR valve and the drive motor driving the EGR valve from the lower side. The motor terminal 21 exposed to the lower side from the cover unit 20 is connected to a driving motor which is not shown.

The cover unit 20 includes the sensor receiving portion 23 and a connector receiving potion 24 which receives the connector unit 30. The sensor unit 10 and the connector unit 30 are fixed to the cover unit 20 by thermal caulking. In addition, a terminal fixing portion 25 which is attached to the motor terminal 21 and a groove portion 26 which is attached to the terminal connection member 22 in the cover unit 20. The cover unit 20 is fixed to a case of an engine with a screw through a collar 27.

In the embodiment, an upper portion of the motor terminal 21 has a shape that the upper portion of the motor 21 is inserted t one portion of the terminal connection member 22. In addition, the connector terminal 31 has a shape which inserts the other end of the terminal connection member 22 and an end portion of the sensor terminal 12. A right end portion of the terminal connection member 22 shown in Fig. 1 is inserted to the upper portion of the motor terminal 21, the terminal connection member 22 is connected to the motor terminal 21, a left side end portion of the terminal connection member 22 is inserted to the upper portion of the connector terminal 31, and then the terminal connection member 22 is connected to the connector terminal 31.

The connector unit 30 is formed in an open end shape to a front direction shown in Fig. 1 so as to receive the connector of the controller. For example, when a connector of the controller receives a connector having a different shape, it is possible to cope with various shapes of many connectors of the controller by changing a shape of the connector unit 30. A connector terminal 31 having 5 connector terminals 31 is attached to the connector unit 30. Three connector terminals 31 is connected to sensor terminals 12 in the front side shown in Fig. 1 and two connector terminals on the rear side is connected to the motor terminal 21 through the terminal connection member 22.

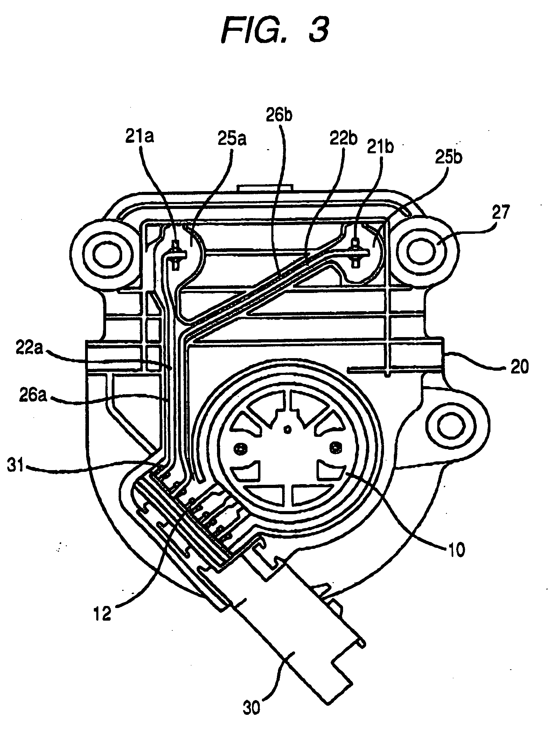

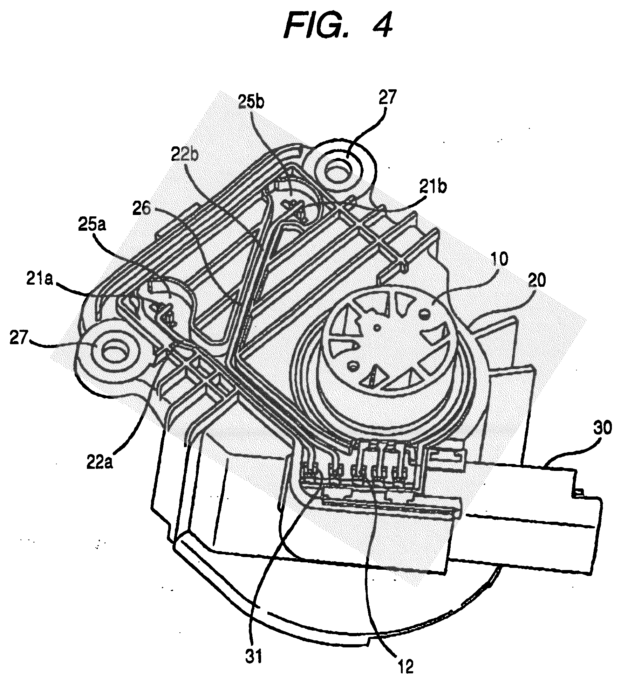

Figs. 3 and 4 are diagrams illustrating an assembled state according to the embodiment. Fig. 3 is a top diagram illustrating the EGR sensor according to the embodiment. Fig. 4 is a perspective view illustrating the EGR sensor as viewed from the connector unit 30 side according to the embodiment.

As shown in Figs. 3 and 4, a terminal fixing portion 25a is formed around the left side end portion in a top surface of the cover unit 20 and a terminal fixing portion 25b is formed around the right side end portion. The former receives the motor terminal 21a and the letter receives the motor terminal 21b. The motor terminal 21a and the motor terminal 21b are formed in the terminal fixing portion 25a and 25b, respectively.

In addition, a groove portion 26a is formed so as to connect in the vicinity of the upper portion of the connector unit 30 and the terminal fixing portion 25a. A groove portion 26b is formed so as to connect in the vicinity of the upper portion of the connector unit 30 and the terminal fixing portion 25b. The groove portion 26a is formed in a linear shape in the upper and lower direction as shown in Fig. 3. Meanwhile, the groove portion 26b is formed from around the upper portion of the connector unit 30 to the upper direction as shown in Fig. 3, and is formed in a curve to the right direction side as shown in Fig. 3.

The terminal connection member 22 includes a terminal connection member 22a and a terminal connection member 22b. The connection member 22a is attached to the groove portion 26a, and connects the connector terminal 31 of the most upper side and the motor terminal 21a. Meanwhile, the terminal connection member 22b is attached to the groove portion 26b and connects the connector terminal 31 which is in a second upper direction side shown in Fig. 3 and the motor terminal 21b.

In the embodiment, the terminal connection member 22 is formed of a conductive linear member (preferably, a circular member). Accordingly, the terminal connection member 22 is formed of a conductive linear member, and then it is possible to reduce cost for manufacturing the terminal connection member 22 having high characteristic of a processing workability.

When the terminal connection member 22 is formed, the linear member is cut to a length corresponding to a length of the groove portion 26a and the groove portion 26b. In addition, the terminal connection member 22 is converted by performing a bending process in accordance with the shape of the groove portions 26a and 26b. Accordingly, the terminal connection member 22 is attached to the groove portions 26a and 26b and the terminal connection members 22a and 22b connecting properly the motor terminal 21 and the connector terminal 31 are formed.

Hereinafter, a manufacturing process of the EGR sensor according to the embodiment will be described with reference to Fig. 1. The sensor unit 10 is already configured to be assembled. In addition, the connector terminal 31 is already configured to be attached to the connector unit 30.

Firstly, the cover unit 20 performs a molding process by using a shaping mold. In addition, the linear member is cut by corresponding to a shape of the groove portion 26 of the cover unit 20 and the linear member performs the bending process so as to form the terminal connection member 22.

In addition, the connector unit 30 is inserted to the connector receiving portion 24 of the cover unit 20 from the upper direction. In addition, a peripheral portion of the connector unit 30 in the cover unit 20 is changed by the thermal caulking so as to fix the connector unit 30 to the cover unit 20.

Next, the sensor unit 10 is inserted to the sensor receiving portion 23 of the cover unit from the upper direction. At this time, the sensor unit 10 is mounted on the cover unit 20 so that the sensor terminal 12 is inserted to the connector terminal 3. In addition, the peripheral portion of the sensor unit 10 in the cover unit 20 is changed by the thermal caulking so as to fix the sensor unit 10 to the cover unit 20. Since the locking portion 11 of the sensor unit 10 comes in contact with an end portion of the sensor receiving portion 23, the sensor unit 10 may not be inserted into the cover unit 20 more than a predetermined position.

Next, the motor terminal 21 is inserted into a groove formed in the terminal fixing portion 25. After the motor terminal 21 is inserted to the groove, the linear member which forms the terminal connection member 22 is attached to the groove portion 26 of the cover unit 20. At this time, the terminal connection member 22 is mounted to the cover unit 20 so that one end of the terminal connection member 22 is inserted into the connector terminal 31. Meanwhile, the terminal connection member 22 is mounted on the cover unit 20 so that the other end is inserted into the motor terminal 21. The motor terminal 21 may be mounted to the cover unit 20 in advance.

A plating process is performed about terminal portions (motor terminal 21, connector terminal 31) exposed from a surface of the cover unit 20 from the upper direction. Accordingly, the plating process is performed about the terminal portions exposed from the surface of the cover unit 20. Accordingly, the sensor unit 10, the cover unit 20, and the connector unit 30 are formed integrally and each unit is electrically connected. At this time, the plating process about the terminal connection member 22 may not be performed.

Finally, the cover unit 20 fixing the sensor unit 10 and the connector unit 30 is attached to the case by using the collar 27. Accordingly, the manufacturing process of the EGR sensor according to the embodiment ends.

In the embodiment, the sensor device includes the sensor unit 10, the connector unit 30 which receives a connector for an external device and connects electrically the external device to the sensor unit 10, and a cover unit 20 which receives the sensor unit 10 and the connector unit 30, in which the units are jointed to each other, in which any two or all of the terminals disposed in the sensor unit 10, the connector unit 30, and the cover unit 20 are connected at positions where the terminals are exposed from the surface of the cover unit 20.

According to the sensor device of the embodiment, the sensor unit 10, the connector unit 30, and the cover unit 20 are jointed so as to form the whole device and the terminals disposed to the units are connected at positions where the terminals are exposed from the surface of the cover unit. Accordingly, since it is not necessary to prepare a shaping mold which shapes the device integrally, it is possible to reduce cost for manufacturing the main body of the device. In addition, since the terminals disposed to the units are connected at the positions where the terminals exposed from the surface of the cover unit, the terminals may not be wired. Accordingly, when the length is elongated, it is possible to maintain high precision.

Specifically, the terminal connection member 22 in which any two or all of the terminals disposed in the sensor unit 10, the connector unit 30, and the cover unit 20 are connected at positions where the terminals are exposed from the surface of the cover unit is provided. Accordingly, since the terminals disposed to the each unit are connected to the terminal connection member 22, it is possible to flexibly cope with various arrangements of the units.

In addition, in the sensor device according to the embodiment, only the sensor unit 10 exposed from the surface of the cover unit 20, the connector unit 30, and the terminals disposed to the cover unit 20 are plated. Accordingly, only the terminals of the units exposed from the surface of the cover unit 30 are plated and the plating process for the terminal connection member 22 is omitted. Accordingly, it is possible to reduce cost for the plating process.

While various embodiments of the invention have been described, it will be apparent to those of ordinary skill in the art that many more embodiments and Implementations are possible within the scope of the invention. Accordingly, the invention is not to be restricted except in light of the attached claims and their equivalents. Other modifications are also possible without departing from the scope of the objection of the present invention.

In the embodiment, the cover unit 20 sustaining the motor terminal 21 is connected to the connector terminal 31, but it is not limited to the embodiment. For example, the sensor terminal 12 and the connector terminal 31 may be connected to the terminal connection member 22. In this case, it is possible to flexibly cope with arrangements of the sensor unit 10 and the connector unit 30.

## Claims

1. A sensor device comprising:
a sensor unit (10);
a connector unit (30) which receives a connector for an external device and connects electrically the external device to the sensor unit (10); and
a cover unit (20) which receives the sensor unit (10) and the connector unit (30), in which the units are jointed to each other,
a motor terminal (21);
wherein the connector unit (30) comprises connector terminals (31);
wherein the sensor unit (10) comprises a sensor terminal (12);
**characterized in that**
a terminal connection member (22) connects the motor terminal (21) and the connector terminal (31);
the sensor terminal (12) and the connector terminal (31) are connected; and
the motor, connector and sensor terminals (21, 31, 12) are connected at positions exposed from the surface of the cover unit (20).

2. The sensor device according to Claim 1, wherein the terminal connection member (22) is formed of a conductive linear member.

3. The sensor device according to Claim 2, wherein the linear member is shaped by a bending process so as to connect any two terminals or all of the terminals disposed in the sensor unit (10), the connector unit (30), and the cover unit (20).

4. The sensor device according to any one of Claims 1 to 3, wherein only terminals exposed from the surface of the cover unit (20) are plated among the terminals disposed in the sensor unit (10), the connector unit (30), and the cover unit (20).

## Patentansprüche

1. Sensorvorrichtung, aufweisend:
Sensoreinheit (10);
eine Verbindereinheit (30), die einen Verbinder für eine externe Vorrichtung aufnimmt und die externe Vorrichtung mit der Sensoreinheit (10) elektrisch verbindet; und
eine Abdeckungseinheit (20), die die Sensoreinheit (10) und die Verbindereinheit (30) aufnimmt und in der die Einheiten miteinander verbunden sind;
einen Motoranschluss (21);
wobei die Verbindereinheit (30) Verbinderanschlüsse (31) aufweist;
wobei die Sensoreinheit (10) einen Sensoranschluss (12) aufweist:
**dadurch gekennzeichnet,**
**dass** ein Anschlussverbindungselement (22) den Motoranschluss (21) und den Verbinderanschluss (31) verbindet;
**dass** der Sensoranschluss (12) und der Verbinderanschluss (31) verbunden sind; und
**dass** die Motor-, Verbinder- und Sensoranschlüsse (21, 31, 12) an Stellen verbunden sind, die von der Oberfläche der Abdeckungseinheit (20) freiliegen.

2. Sensorvorrichtung nach Anspruch 1,
wobei das Anschlussverbindungselement (22) aus einem leitfähigen linearen Element gebildet ist.

3. Sensorvorrichtung nach Anspruch 2,
wobei das lineare Element durch einen Biegevorgang derart geformt ist, dass beliebige zwei Anschlüsse oder alle der Anschlüsse verbunden sind, die in der Sensoreinheit (10), der Verbindereinheit (30) und der Abdeckungseinheit (20) angeordnet sind.

4. Sensorvorrichtung nach einem der Ansprüche 1 bis 3,
wobei nur von der Oberfläche der Abdeckungseinheit (20) freiliegende An-schlüsse von den in der Sensoreinheit (10), der Verbindereinheit (30) und der Abdeckungseinheit (20) angeordneten Anschlüssen plattiert sind.

## Revendications

1. Dispositif de capteur comprenant :
une unité de capteur (10) ;
une unité de connecteur (30) qui reçoit un connecteur pour un dispositif externe et qui connecte électriquement le dispositif externe à l'unité de capteur (10) ; et
une unité de couvercle (20) qui reçoit l'unité de capteur (10) et l'unité de connecteur (30), dans laquelle les unités sont liées l'une à l'autre,
une borne de moteur (21) ;
dans lequel l'unité de connecteur (30) comprend des bornes de connecteur (31) ;
dans lequel l'unité de capteur (10) comprend une borne de capteur (12) ;
**caractérisé en ce que**
un élément de connexion de borne (22) connecte la borne de moteur (21) et la borne de connecteur (31) ;
la borne de capteur (12) et la borne de connecteur (31) sont connectées ; et
les bornes de moteur, de connecteur et de capteur (21, 31, 12) sont connectées en des positions exposées à la surface de l'unité de couvercle (20).

2. Dispositif de capteur selon la revendication 1, dans lequel l'élément de connexion de borne (22) est formé d'un élément linéaire conducteur.

3. Dispositif de capteur selon la revendication 2, dans lequel l'élément linéaire est mis en forme par un processus de pliage afin de connecter n'importe quelle paire de bornes ou toutes les bornes disposées dans l'unité de capteur (10), l'unité de connecteur (30) et l'unité de couvercle (20).

4. Dispositif de capteur selon l'une quelconque des revendications 1 à 3, dans lequel parmi les bornes disposées dans l'unité de capteur (10), l'unité de connecteur (30) et l'unité de couvercle (20), seules les bornes exposées à la surface de l'unité de couvercle (20) sont plaquées.
